# EUROPEAN PATENT SPECIFICATION

(11) **EP 2 111 916 B1**
(45) Date of publication and mention of the grant of the patent: **24.10.2012**
(21) Application number: 08154887.7
(22) Date of filing: 21.04.2008
(51) Int. Cl.: B01F 3/04, B01F 5/04, B01F 5/06, F01N 1/08, F01N 3/20

(54) **Gas treatment apparatus, vehicle equipped with it and method for treatment of an exhaust gas**
Abgasbehandlungsvorrichtung, damit ausgestattetes Fahrzeug und Verfahren zur Abgasbehandlung
Appareil de traitement des gaz d'échappement, véhicule équipé d'un tel appareil et procédé pour le traitement de gaz d'échappement

(43) Date of publication of application: 28.10.2009
(73) Proprietor: Swenox AB, 42131 Västra Frölunda (SE)
(72) Inventor: Karlsson, Mikael, 413 11, GÖTEBORG (SE)
(74) Representative: Lind, Urban Arvid Oskar

(56) References cited:
- WO-A-2006/010922
- DE-A1- 10 239 417
- US-A1- 2001 038 575
- US-A1- 2003 072 214

## Description

### Field of the invention

The present invention relates to a mixing device for mixing a gas of a gas stream conveyed through the mixing device with an additive fluid. Such mixing devices find their use in many different lines of applications. In particular, the mixing device of the present invention is directed to the use in gas treatment apparatuses for treating a gas stream, and in particular gas treatment apparatuses for treating exhaust gases from diesel engines. The present invention also extends to a vehicle having a diesel engine, the vehicle being equipped with such a gas treatment apparatus.

### Background of the invention

Mixing devices for mixing a gas of a gas stream with an additive fluid, and in particular an additive gas or additive liquid, are used in many different lines of applications, such as in processing industry, in jet turbines, in exhaust after treatment systems, etc.

In exhaust after treatment systems, diesel engine exhaust gases contain a number of noxious gases, such as nitrogen oxides, sulphur oxides and carbon oxides, as well as un-burnt hydrocarbons, carbon and other particles. Some of these compounds can be treated so as to render them less obnoxious. It is therefore common practice to pass the exhaust gases through one or more treatment elements such as catalytic converters and filters. The exhaust gases can be subjected to reduction of nitrogen oxides to nitrogen by injecting a reducing agent, typically urea dissolved in water, into the gas stream and then passing it through a catalytic treatment element to convert residual ammonia from the urea to nitrogen and water, which are acceptable exhaust emissions. This process is known as Selective Catalytic Reduction (SCR) . In practice, the efficiency of the process is partly dependent upon the quality of the mixing of the reducing agent and gas before the mixture enters the catalyst. Such a technology may also be combined with other technologies such as catalyzed Diesel Particulate Filters, CRT(TM) (Continuously Regenerating Trap) technology or other treatment methods to further reduce undesirable emissions from diesel engines. In such filters, adequate mixing may also be required, if e.g. a fluid containing hydrocarbons, such as diesel, is mixed with the gas stream before filtration.

Such mixing devices for exhaust after treatment systems are e.g. disclosed in WO 2006/010922 which discloses a gas treatment apparatus in accordance with the preamble of claim 1.

Other mixing arrangements of a similar type are disclosed in US 2001/0038575, DE 102 39 417 and US 2003/0072214.

To ensure acceptable mixing of the gas stream and the additive fluid, the main focus in recent years, e.g. within the field of exhaust after treatment, has been on the hydrodynamic effects, and in particular how to obtain improved mixing. However, an increasingly important problem is the acoustic side-effects. Many of the known mixing devices generates very high noise levels. High noise levels may be generally disturbing and uncomfortable for people working in the vicinity of the mixing device, and may also be hazardous and subject to regulatory requirements. In the field of exhaust treatment, the after treatment system in which the mixing device is arranged is also often required to function as a silencer, which makes the disadvantage of excessive noise generation even worse.

In fig 4, a diagram showing the noise level generated by the mixing device of WO 2006/010922 at various engine speeds is illustrated. The various engine speed essentially corresponds to a difference in flow velocity through the mixing device. The diagram clearly indicate that noise is an important problem to consider for mixing devices. In the low frequency range the firing orders of the engine is dominating, which is due to the gas pulsation created by the engine. Flow noise contribution would typically be of mid to high frequency range, hence the difference between the two curves indicate flow noise problems. The flow noise scales with velocity to a power of 6 or 8 depending on the source mechanism, which explains the clear increase in noise level at the higher flow speeds.

There is therefore a need for a mixing device with adequate mixing properties and which addresses the above-discussed noise problem by lower noise generation and/or improved noise attenuation.

### Summary of the invention

It is therefore an object of the present invention to provide a gas treatment apparatus according to claim 1.

In this application, "affection of the internal flow field" is used to indicate essentially any significant change in the hydrodynamic properties of the gas stream, such as increased turbulence, redirection of the stream, creation of a rotational flow, i.e. a flow where at least part of the stream has a flow direction with a rotational component, etc. In one embodiment, the at least one mixing plate forms angled surfaces that cause at least some of the gas to have a rotational flow in one direction and at least some of the gas to have a rotational flow in an opposite direction.

The provision of flexible tongues that are arranged to oscillate have proven surprisingly effective for lowering the noise generated by the mixing device, and without any negative effects on the mixing properties.

The introduction of the tongue into the pathway of the gas stream, such as in a duct guiding the gas stream, influences the internal flow field. In a mixer, this is an advantageous effect, since this promotes turbulence and adequate mixing. In mixing devices, the hydrodynamic field is naturally of interest, but this invention focuses more on the acoustic field. It has been shown by the present inventor, that by allowing the tongue of the mixing plate to be flexible one can influence the acoustic source-strength, and thus to lower the overall noise level. In particular, the invention has proven useful for low frequencies and gas streams with small Mach numbers (<0.3), as is often the case in e.g. exhaust after treatment systems. However, the invention also works well for higher gas stream velocities.

The mixing device is in particular suitable for mixing of an additive fluid which is a liquid, i.e. to perform a two-phase mixing. However, the mixing device of the present invention may also be used for mixing of two gases, and consequently the additive fluid may also be a gas.

The mixing plate may further be provided with micro-perforations for additional noise attenuation.

The plate is made of metal, and most preferably of steal. The material is preferably robust enough to endure the specific environment of the mixing device, such as in an exhaust after treatment system. In order to obtain suitable flexibility, and thus appropriate noise reduction, the tongue can have a thickness in the range 0.2 - 3 mm, and more preferably in the range 0.3 - 2 mm. In accordance with claim 1 the tongue has a thickness in the range 0.4 - 1 mm. However, it is noted that other thickness dimensions may also be considered, e.g. depending on the material being used, the length and width dimensions of the tongue, the velocity of the gas stream, etc. The mixing device is preferably arranged to convey a gas stream with a velocity of less than 0.5 Mach, and preferably less than 0.3 Mach.

It is also preferred that the tongue has a thickness adapted to provide a resonance oscillation with an amplitude exceeding 10% of the thickness of the tongue, and preferably exceeding 25%, and most preferably exceeding 50%.

The use of one or several flexible tongues as devised by the present invention is particularly useful when used in the general type of mixing device disclosed in WO 06/010922. Thus, it is preferred that the mixing device comprises an inlet chamber, a mixing conduit within which the additional inlet is located and which forms said mixing chamber, and an outlet chamber, said inlet chamber and outlet chamber being separated by a wall, and said mixing conduit extending through the wall from the inlet chamber to the outlet chamber, the arrangement being such that gas must pass through the mixing conduit to pass from the inlet chamber to the outlet chamber, wherein the outer wall of the mixing conduit extending into said inlet chamber comprises at least one aperture through which a gas can enter the mixing conduit from the inlet chamber, the aperture including the at least one mixing plate, causing at least some of a gas passing through the at least one aperture to have a rotational flow within said mixing chamber. However, it should be understood that the flow velocity could also include radial or axial components with respect to the rotational axis as the gas enters the gas treatment apparatus.

According to the invention, the gas treatment apparatus for treating a gas streamcomprises at least two sections through which the gas stream to be treated is conveyed sequentially, wherein at least one of said sections is a mixing device as discussed in the foregoing.

The gas stream to be treated is an exhaust gas stream and the additive fluid is a reducing agent, said mixing device being arranged upstream of a catalytic treatment section.

According to still another aspect of the invention, there is provided a vehicle having a diesel engine, the vehicle being equipped with a gas treatment apparatus as discussed in the foregoing for treating the exhaust gas from the diesel engine.

Further, according to another aspect of the present invention, there is provided a method in accordance with claim 1.

These and other aspects of the invention will be apparent from and elucidated with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic overview of a gas treatment apparatus in which the mixing device of the present invention may be used;
Fig 2 shows a cross section through a mixing device according to a first embodiment of the invention;
Figs. 3a and b shows a cross section through a mixing device according to a second embodiment of the invention;
Fig 4 is a diagram illustrating the noise levels generated by a known mixing device at various gas stream velocities; and
Fig 5 is a diagram illustrating an example of the noise reducing effect obtained by means of the present invention.

### Description of preferred embodiments

In the following detailed description, preferred embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations of the invention. Even though in the following description, numerous specific details are set forth to provide a more thorough understanding of the present invention, it will be apparent to one skilled in the art that the present invention may be practiced without these specific details. In other instances, well known constructions or functions are not describe in detail, so as not to obscure the present invention.

Further, the mixing device is in the following disclosed as being a part of a gas treatment apparatus, and in particular for exhaust gases. However, even though this is a preferred field of use for the mixing device, it is to be noted that the mixing device may also be used in many other fields, such as in processing industry and in jet turbines. Accordingly, the present invention is not limited to use in gas treatment apparatuses.

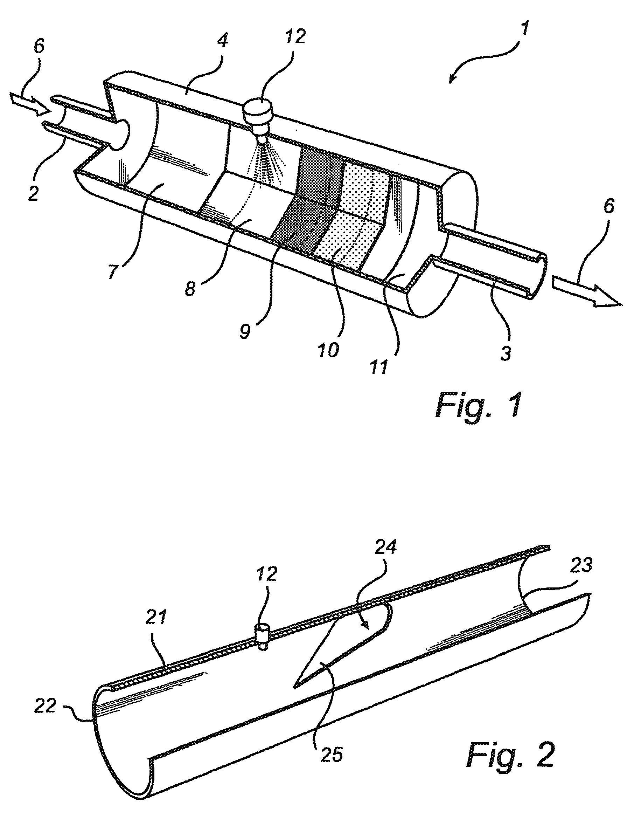

Figure 1 shows a schematic representation of a gas treatment apparatus 1 having an inlet end 2, an outlet end 3 and a surrounding wall 4. It should be understood that, although the surrounding wall is shown as a single wall, it may be formed from two or more wall sections welded or coupled together. Arrows 6 show the direction of gas flow through the apparatus 1. Gas enters the apparatus 1 through the inlet end 2 and is sequentially guided through two or more sections 7-11 arranged to perform various forms of gas treatment, as is per se known in the art. These sections may e.g. be one or several of a catalyst, a filter, a conveying conduit, etc. At least one of the sections is a mixing device, of the type discussed in more detail in the following. In the schematic embodiment of Figure 1, the mixing device 8 forms a mixing region in which an additive fluid, such as a reducing agent, is added through an additional inlet 12 to the gas stream and in which the gas and reducing agent are mixed. Upon leaving the mixing region, the gas may e.g. enter a catalytic treatment chamber 10, comprising a catalytic treatment element. The catalytic treatment element includes a catalyst that catalyses a reaction between at least one chemical within the gas stream and the reducing agent. The gas leaving the catalytic treatment chamber 10 then exits the apparatus 1 through the outlet 3.

Although the inlet 2 and outlet 3 are shown in Figure 1 as having a smaller diameter than the surrounding wall 4 of the apparatus 1, it should be understood that the inlet 2 and outlet 3 may have any suitable size or shape. It should also be understood that the gas passing through the inlet 2 may already have undergone one or more gas treatments, for example filtration, a catalytic treatment, or other treatment.

The catalytic treatment chamber 10 preferably contains a catalytic treatment element that preferably catalyses a reaction between a gas stream passing through the apparatus and the reducing agent added such that NOₓ in the gas stream is converted to N₂ and water. The preferred reducing agent is a urea in water solution and this is added through the additional inlet into the gas stream. It should be noted that the catalytic treatment element may be any other catalytic treatment element, for example it may act as a hydrolysis catalyst. A potential application is for example diesel exhaust after-treatment systems using selective catalytic reduction (SCR), where an additive is injected under low pressure into an exhaust stream.

Although it is preferred that the mixing device discharges directly into the catalytic treatment chamber it should be understood that the apparatus may include other chambers between the mixing device and the catalytic treatment chamber. Gas still preferably flows through the mixing conduit to pass from the guide chamber to the catalytic treatment chamber, but may additionally have to pass through other chambers.

The mixing device may also be used to mix the gas stream with a fluid containing hydrocarbons, such as diesel, before filtration, e.g. in case of an active regenerating particle filter.

Figure 2 shows a mixing device according to a first embodiment. The mixing device comprises a conduit 21 through which the gas stream is conveyed, from an inlet 22 to an outlet 23. The conduit is preferably of a circular or oval cross-sectional shape. The conduit forms a channel for leading the gas stream through the mixing device, and forms a mixing chamber within the channel. The inlet 22 and outlet 23 may be connected to other sections of a gas treatment apparatus, or form the inlet and/or outlet of the apparatus. An additional inlet 12 is arranged on the wall of the conduit 21 for introducing an additive fluid into the gas stream. Further, a mixing means in the form of a mixing plate 24 is arranged on the inside wall of the conduit, and extending transversely into the gas stream. The plate affects the internal flow field of the gas stream, by creating a turbulence in the flow downstreams of the plate. The turbulence promotes mixing of the gas and the additive fluid.

The additional inlet 12 is arranged in the vicinity of the mixing plate 24. In the illustrated example, the additional inlet is arranged upstreams of the plate 24, but the reverse order is also feasible.

The forward end region of the plate forms a tongue 25 extending into the pathway of the gas stream. This tongue is of a thickness making the tongue flexible. Thus, the tongue has a constitution that allows the tongue to oscillate. Accordingly, the gas stream will induce a resonance oscillation in the tongue, which will reduce the noise generation of the mixing device.

In the illustrative example, tongue of the metal plate is of a triangular shape, and with a length making it extend past the center of the conduit. However, is it to be noted that the tongue may be of essentially any shapes and dimensions. It is further noted that more than one tongue may be provided, arranged either in parallel or sequentially after each other.

The mixing plate may further be provided with micro-perforations (not shown) for additional noise attenuation.

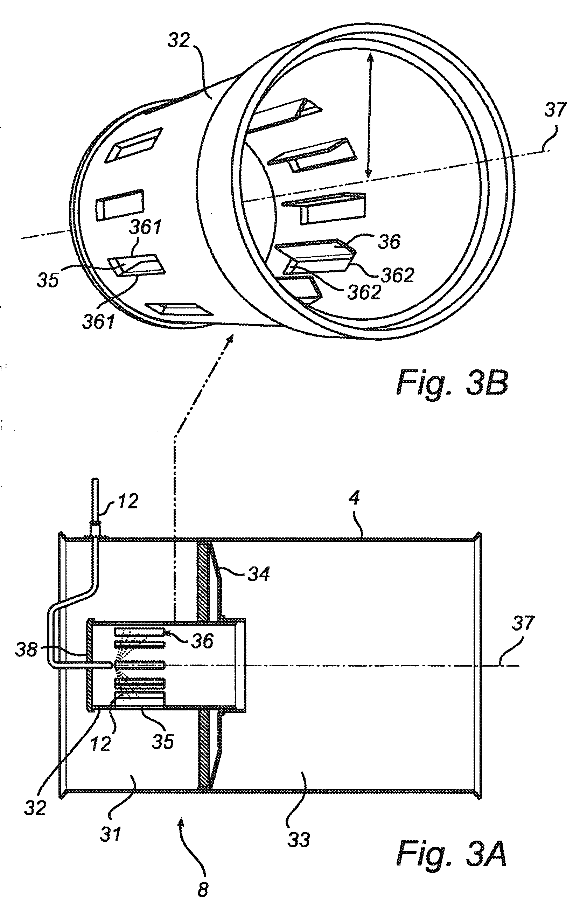

In another embodiment, illustrated in Figure 3, the mixing device is of the general type disclosed in WO 06/010922.

The mixing device of Figure 3a comprises an inlet chamber 31, a mixing conduit 32 within which the additional inlet 12 is located and which forms said mixing chamber, and an outlet chamber 33. The inlet chamber and outlet chamber are separated by a wall 34. The mixing conduit 32 extends through the wall 34 from the inlet chamber 31 to the outlet chamber 33, so that gas must pass through the mixing conduit 32 to pass from the inlet chamber 31 to the outlet chamber 33. The outer wall of the mixing conduit 32 extending into the inlet chamber 31 comprises at least one, and preferably a plurality of aperture(s) 35 through which gas can enter the mixing conduit 32 from the inlet chamber 31. The aperture(s) includes at least one mixing plate 36, causing at least some of a gas passing through the aperture to have a rotational flow within the mixing chamber. In case the mixing device is used in an gas treatment apparatus, the outlet chamber 33 is preferably connected to a catalytic treatment chamber.

The mixing conduit 32 includes an outer wall that surrounds a mixing axis 37 and an endwall 38. The additional inlet 12 extends through the surrounding wall or through the endwall 38 of the mixing conduit 32 so that outlet nozzles from the additional inlet 12 are arranged such that the additive fluid is injected into the gas stream substantially radially outwardly from the mixing axis 37.

The apertures 35 through which gas from the inlet chamber 31 can enter the mixing conduit 32 are preferably arranged on the outer wall. In this example the endwall 38 includes no apertures, and prevents gas from entering the outer wall through the mixing conduit without passing through the apertures 35 in the outer wall. However, it should be understood that the endwall 38 may also include apertures.

The mixing plates 36 are associated with each of the apertures 35. The mixing plates are arranged to cause at least some of the gas passing through the apertures 35 to flow circumferentially around the mixing axis 37. The mixing plates 36 and apertures 35 are better shown in Figure 3b.

The mixing plates comprises tongues, which are flexible in the same way as discussed above in relation to the first embodiment, thereby reducing the noise generated by the mixing device.

Preferably, as illustrated in Figure 3b, the aperture 35 is rectangular having long sides 361 and short sides 362. The long sides 361 are substantially parallel with the mixing axis 37. The mixing plate 36 is a deflection wall that extends from a long side 361 of the aperture 35 into the mixing conduit 32. Thus, the tongue of the mixing plate is in this example formed by cutting three sides of the aperture 35 and then bending the resulting flap into the mixing conduit to form the tongue. However, as discussed in relation to the previously discussed embodiment, the tongue may have essentially any shape and dimensions. For example, the mixing plates and tongues can be curved or otherwise shaped to aid in the deflection of gas in the required direction. Further, the mixing plates and apertures can be formed in a variety of other ways, which may include, for example, separate fabrication of mixing plates and subsequent attachment to the mixing conduit wall. It should be understood that the apertures may also have any suitable shape.

Gas passing from the inlet chamber 31 into the mixing conduit 32 through the aperture 35 may contact the mixing plate 36 and be deflected so that it moves substantially circumferentially around the mixing axis 37. The deflected gas from the apertures 35 cause the gas flow within the mixing conduit 32 to swirl or rotate about the mixing axis 37 which increases turbulence and therefore promotes mixing.

### Experimental results

A theoretical background and some experimental results to confirm this will be discussed briefly.

We can separate the obstructions influence on the acoustic field in a passive and an active part. The passive part is given by the reflection and transmission characteristics for an incident acoustic wave while the active part represents any sources. The different source mechanisms can be grouped according to their dependence on the mean flow velocity of the media as mono-, di- and quadro-poles. Working with low Mach number internal flows without entropy changes or any mass injection the main contributor is the dipole term associated with the fluctuating forces acting on the object. The force being given by the unsteady flow separation process.

A mixer device as disclosed above with reference to Fig. 2 will now be discussed. The mixer plate induces two vortices, which propagate down the duct helping the injected fluid droplets to distribute into the gas. But, as already discussed, we are not mainly concerned with the mixing properties of the plate but its influence on the acoustic field. The passive part may be estimated using the constriction ratio including the vena-contracta effect, or more readily, the steady state pressure loss coefficient. The active part, the dipole term, may be estimated assuming the fluctuating drag force over the constriction to be proportional to the steady state drag force, i.e. the pressure loss times the duct area.

To reduce the strength of the dipole source one needs to manipulate the flow separation mechanism. As proposed by this inventor, a way of doing this, not having to resort to major design changes, is to allow a tongue of the plate to be somewhat flexible. Thus affecting the unsteady flow separation process but leaving the mean flow field rather intact.

To validate the above statement experimentally two different configurations have been tested. One where the plate can be considered "stiff", and one where the plate is flexible to a certain degree. The different configurations are realized by changing the thickness of the plate. Measurements were taken for each plate at a number of mean flow velocities, ranging from M=0 to M=0.3.

The passive and active acoustic properties can be determined using a two step procedure. First the passive data (scattering matrix) is determined using a two microphone wave decomposition technique with external sources. Second a source matrix is obtained assuming that the terminations are known from the passive measurement. The test object was further placed in a transparent plastic pipe for optical access.

The scattering matrix relates the forward and backward traveling wave amplitudes of the inlet and outlet cross-sections of the test object. Having pairs of microphones at known separation distances and using plane wave decomposition the traveling wave amplitudes are obtained.

Once the scattering matrix and the reflection coefficients are known, the source vector can be determined. To indicate how flexible the plates are the vibration level was measured for each test case.

Finally for visualization purposes and to allow for further comparisons to numerical simulations the flow field was determined using Particle Image Velocimetry (PIV). The PIV-system comprised a Spectra Physics 400 mJ double pulsed Nd:Yag laser operating at 15 Hz as a light source, and a double-frame Kodak ES1.0 8- bit CCD camera (1018x1008 pixels). Smoke particles, generated by heating a glycol based liquid with a disco smoke generator (JEM ZR20 Mk II), were used to seed the air. The smoke was injected through hoses connected to the contraction of the pipe apparatus. Velocity measurements close to the vortex generator as well as further downstream give both information about the size and strength of the generated vortices and the possibility to trace the downstream evolution of the vortices.

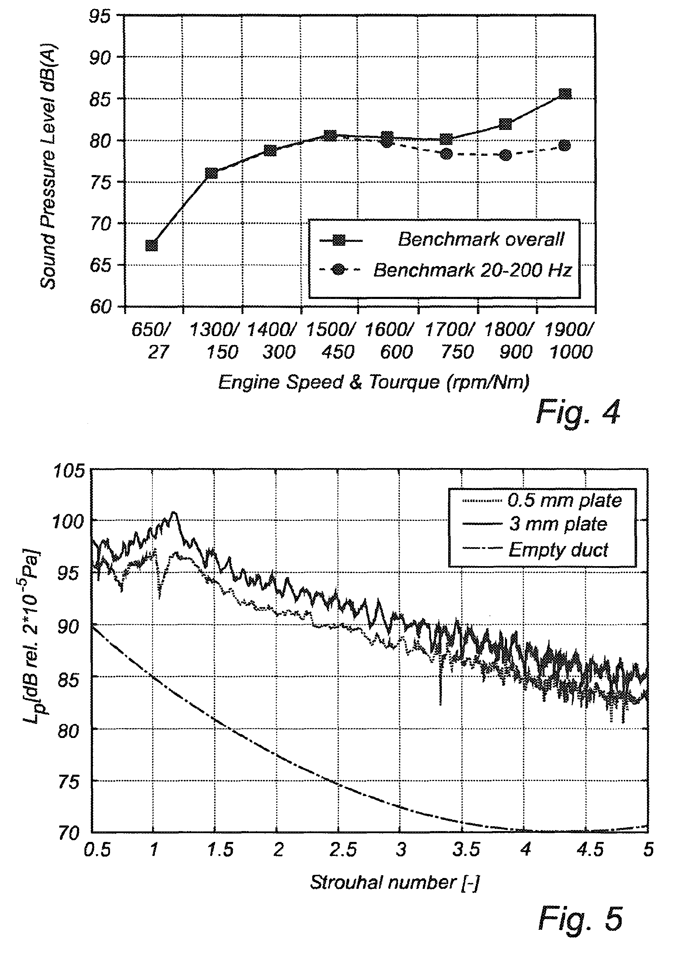

The result of the measurements clearly indicate that the provision of a flexible tongue significantly reduces the noise compared to a stiff tongue. The diagram in Fig. 5 illustrates a result of the above-discussed type of measurement. This particular measurement is made at a gas stream velocity of Mach 0.21, and with mixing plate thicknesses of 0.5 mm and 3 mm. The diagram illustrated the measured sound level at various Strouhal numbers. As is known in the field, Strouhal numbers are dimensionless numbers describing an oscillating flow, and generally relating to frequency divided by flow rate.

Seen from the top, the highest curve corresponds to the stiff plate with a thickness of 3 mm, the second curve corresponds to the flexible plate with a thickness of 0.5 mm, and the lowest curve corresponds to the sound generated by the pipe in itself (i.e. without any mixing plate).

As is clearly derivable from the measurement illustrated in Fig 5, the sound level is significantly lowered by using a flexible plate instead of a stiff plate. The improvement is about 3 dB for the flexible plate, corresponding to an energy level of about half the energy level for the stiff plate.

In the optical measurement, it has been concluded that the flexible plate is oscillating with an amplitude corresponding to about the thickness of the plate, whereas the stiff plate has a very limited oscillation, with an amplitude of only a few percent or less of the thickness. Accordingly, the stiff plate can in this context be considered to be still during the measurement.

### Concluding remarks

Specific embodiments of the invention have now been described. However, several alternatives are possible, as would be apparent for someone skilled in the art. For example, the proposed solution appear to be applicable for essentially all type of mixers having a mixing plate with a tongue extending into the gas stream. Further, the mixing plate may be of essentially any shape and dimensions. Still further, the use of the new mixing device is not limited to exhaust after treatment systems, but may also be used in other types of gas treatment apparatuses, as well as in other contexts, such as in turbines and the like.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A gas treatment apparatus for treating exhaust gases from a diesel engine, said gas treatment apparatus comprising at least two sections (7-11) through which the gas stream to be treated is conveyed sequentially, wherein one of said sections is a mixing device and one of said sections comprises a catalytic treatment section, wherein said mixing device (8) is arranged to mix a gas of a gas stream conveyed through the mixing device with a reducing agent , said mixing device comprising:
a channel (21; 32) for leading the gas stream through the mixing device from an inlet (22; 35) to an outlet (23), wherein a mixing chamber is formed within said channel;
an additional inlet (12) for introducing a reducing agent into the gas stream; and
a mixing means comprising at least one mixing plate (24; 36) for affecting the internal flow field of said gas stream in the vicinity of said additional inlet, said achieved internal flow field promoting mixing of said additive fluid and said gas stream;
wherein said mixing plate (24) is made of metal and comprises at least one tongue (25) extending into the pathway of said gas stream,
**characterized in that** said tongue has a thickness in the range 0.4 - 1 mm, thereby making the tongue flexible, whereby the gas stream induces a noise attenuating resonance oscillation in said tongue.

2. The gas treatment apparatus of claim 1, wherein the additional inlet is arranged to introduce a reducing agent in the form of a liquid.

3. The gas treatment apparatus of claim 1 or 2, wherein the mixing plate (24; 36) further comprises micro-perforations for additional noise attenuation.

4. The gas treatment apparatus of any one of the preceding claims, wherein the plate (24; 36) is made of steel.

5. The gas treatment apparatus of any one of the preceding claims, wherein the mixing device is arranged to convey a gas stream there through having a velocity of less than 0.5 Mach, and preferably less than 0.3 Mach.

6. The gas treatment apparatus of any one of the preceding claims, wherein the at least one mixing plate is arranged to provide a rotational flow of said gas stream.

7. The gas treatment apparatus of claim 6, wherein the at least one mixing plate forms angled surfaces that cause at least some of the gas to have a rotational flow in one direction and at least some of the gas to have a rotational flow in an opposite direction.

8. The gas treatment apparatus of any one of the preceding claims, wherein the mixing device comprises an inlet chamber (31), a mixing conduit (32) within which the additional inlet (12) is located and which forms said mixing chamber, and an outlet chamber (33), said inlet chamber and outlet chamber being separated by a wall (34), and said mixing conduit extending through the wall from the inlet chamber to the outlet chamber, the arrangement being such that gas must pass through the mixing conduit to pass from the inlet chamber to the outlet chamber, wherein the outer wall of the mixing conduit extending into said inlet chamber comprises at least one aperture (35) through which a gas can enter the mixing conduit from the inlet chamber, the aperture including the at least one mixing plate (36), causing at least some of a gas passing through the at least one aperture to have a rotational flow within said mixing chamber.

9. The gas treatment apparatus of any one of the preceding claims 9 wherein said mixing device is arranged upstream of said catalytic treatment section.

10. A vehicle having a diesel engine, the vehicle being equipped with a gas treatment apparatus as claimed in any one of the preceding claims for treating the exhaust gas from the diesel engine.

11. A method for treatment of an exhaust gas from a diesel engine , said method comprising:
leading the gas stream through a mixing region, and in said mixing region:
introducing a reducing into the gas stream,
providing at least one mixing plate for affecting the internal flow field of said gas stream before or after the introduction of said reducing agent, said achieved internal flow field promoting mixing of said reducing agent and said gas stream,
wherein said mixing plate is made of metal, and at least a part of said mixing plate is of a thickness in the range 0.4-1 mm, thereby making said part flexible and allowed to oscillate, whereby the gas stream induces a noise attenuating resonance oscillation in said plate; and
leading the gas through a catalytic treatment section.

## Patentansprüche

1. Gasbehandlungsvorrichtung zum Behandeln von Abgasen aus einem Dieselmotor, wobei die Gasbehandlungsvorrichtung wenigstens zwei Sektionen (7-11) umfasst, durch die der zu behandelnde Gasstrom nacheinander befördert wird, wobei eine der Sektionen eine Mischeinrichtung ist und eine der Sektionen eine Katalyse-Behandlungssektion umfasst, wobei die Mischeinrichtung (8) dafür angeordnet ist, ein Gas eines durch die Mischeinrichtung beförderten Gasstroms mit einem Reduktionsmittel zu mischen, wobei die Mischeinrichtung Folgendes umfasst:
einen Kanal (21; 32) zum Leiten des Gasstroms durch die Mischeinrichtung von einem Einlass (22; 35) zu einem Auslass (23), wobei innerhalb des Kanals eine Mischkammer gebildet ist,
einen zusätzlichen Einlass (12) zum Einleiten eines Reduktionsmittels in den Gasstrom und
ein Mischmittel, das wenigstens eine Mischplatte (24; 36) umfasst, um das interne Strömungsfeld des Gasstroms in der Nachbarschaft des zusätzlichen Einlasses zu beeinflussen, wobei das erreichte interne Strömungsfeld das Mischen des Zuschlagfluids und des Gasstroms fördert,
wobei die Mischplatte (24) aus Metall hergestellt ist und wenigstens eine Zunge (25) umfasst, die sich in den Leitweg des Gasstroms erstreckt,
**dadurch gekennzeichnet, dass** die Zunge eine Dicke in dem Bereich 0,4-1 mm hat, wodurch die Zunge flexibel gemacht wird, wodurch der Gasstrom eine geräuschdämpfende Resonanzschwingung in der Zunge induziert.

2. Gasbehandlungsvorrichtung nach Anspruch 1, wobei der zusätzliche Einlass dafür angeordnet ist, ein Reduktionsmittel in der Form einer Flüssigkeit einzuleiten.

3. Gasbehandlungsvorrichtung nach Anspruch 1 oder 2, wobei die Mischplatte (24; 36) ferner Mikroperforationen für eine zusätzliche Geräuschdämpfung umfasst.

4. Gasbehandlungsvorrichtung nach einem der vorhergehenden Ansprüche, wobei die Platte (24; 36) aus Stahl hergestellt ist.

5. Gasbehandlungsvorrichtung nach einem der vorhergehenden Ansprüche, wobei die Mischeinrichtung dafür angeordnet ist, einen Gasstrom, der eine Geschwindigkeit von weniger als 0,5 Mach und vorzugsweise weniger als 0,3 Mach hat, durch dieselbe zu befördern.

6. Gasbehandlungsvorrichtung nach einem der vorhergehenden Ansprüche, wobei die wenigstens eine Mischplatte dafür angeordnet ist, eine Drehströmung des Gasstroms zu gewährleisten.

7. Gasbehandlungsvorrichtung nach Anspruch 6, wobei die wenigstens eine Mischplatte abgewinkelte Flächen bildet, die bewirken, dass wenigstens etwas von dem Gas eine Drehströmung in einer Richtung hat und wenigstens etwas von dem Gas eine Drehströmung in einer entgegengesetzten Richtung hat.

8. Gasbehandlungsvorrichtung nach einem der vorhergehenden Ansprüche, wobei die Mischeinrichtung eine Einlasskammer (31), eine Mischleitung (32), innerhalb derer der zusätzliche Einlass (12) angeordnet ist und welche die Mischkammer bildet, und eine Auslasskammer (33) umfasst, wobei die Einlasskammer und die Auslasskammer durch eine Wand (34) getrennt sind und die Mischleitung sich durch die Wand von der Einlasskammer zu der Auslasskammer erstreckt, wobei die Anordnung derart ist, dass das Gas durch die Mischleitung hindurchgehen muss, um von der Einlasskammer zu der Auslasskammer hindurchzugehen, wobei die Außenwand der Mischleitung, die sich in die Einlasskammer erstreckt, wenigstens eine Öffnung (35) umfasst, durch die ein Gas aus der Einlasskammer in die Mischleitung eintreten kann, wobei die Öffnung wenigstens eine Mischplatte (36) einschließt, die bewirkt, dass wenigstens etwas von einem Gas, das durch die wenigstens eine Öffnung hindurchgeht, innerhalb der Mischkammer eine Drehströmung hat.

9. Gasbehandlungsvorrichtung nach einem der vorhergehenden Ansprüche, wobei die Mischeinrichtung stromaufwärts von der Katalyse-Behandlungssektion angeordnet ist.

10. Fahrzeug, das einen Dieselmotor hat, wobei das Fahrzeug mit einer Gasbehandlungsvorrichtung nach einem der vorhergehenden Ansprüche ausgestattet ist, um das Abgas aus dem Dieselmotor zu behandeln.

11. Verfahren zur Behandlung eines Abgases aus einem Dieselmotor, wobei das Verfahren Folgendes umfasst:
das Leiten des Gasstroms durch einen Mischbereich und, in dem Mischbereich:
das Einleiten eines Reduktionsmittels in den Gasstrom,
das Bereitstellen wenigstens einer Mischplatte, um das interne Strömungsfeld des Gasstroms vor oder nach dem Einleiten des Reduktionsmittels zu beeinflussen, wobei das erreichte interne Strömungsfeld das Mischen des Reduktionsmittels und des Gasstroms fördert,
wobei die Mischplatte aus Metall hergestellt ist und wenigstens ein Teil der Mischplatte eine Dicke in dem Bereich 0,4- 1 mm hat, wodurch der Teil flexibel gemacht wird, wodurch der Gasstrom eine geräuschdämpfende Resonanzschwingung in der Platte induziert, und
das Leiten des Gases durch eine Katalyse-Behandlungssektion.

## Revendications

1. Un appareil de traitement des gaz d'échappement pour traiter les gaz d'échappement d'un moteur Diesel, ledit appareil de traitement des gaz d'échappement comprenant au moins deux sections (7-11) à travers lesquelles le flux des gaz à traiter est transporté de façon séquentielle, dans lequel une des dites sections est un dispositif de mélange et une des dites section comprend une section de traitement catalytique, dans lequelle ledit dispositif de mélange (8) est constitué pour mélanger un gaz d'un flux de gaz transporté à travers le dispositif de mélange avec un agent réducteur, ledit dispositif de mélange comprenant :
un conduit (21 ; 32) pour diriger le flux de gaz à travers le dispositif de mélange d'une entrée (22 ; 35) vers une sortie (23), dans lequel une chambre de mélange est formée dans ledit conduit,
une entrée supplémentaire (12) pour introduire un agent réducteur dans le flux de gaz, et
un moyen de mélange comprenant au moins une plaque de mélange (24 ; 36) pour influer sur le champ d'écoulement interne dudit flux de gaz à proximité de ladite entrée supplémentaire, ledit champ d'écoulement interne obtenu favorisant le mélange dudit fluide additif et dudit flux de gaz,
dans lequel ladite plaque de mélange (24) est faite en métal et comprend au moins une languette (25) s'étendant dans le passage dudit flux de gaz **caractérisé en ce que** ladite languette a une épaisseur se situant dans la gamme de 0,4 - 1 mm, rendant ainsi ladite languette flexible, le flux de gaz produisant de ce fait une oscxillation de résonance atténuant le bruit dans ladite languette.

2. L'appareil de traitement des gaz d'échappement selon la revendication 1 dans laquelle l'entrée supplémentaire est disposée pour introduire un agent réducteur sous la forme d'un liquide.

3. L'appareil de traitement des gaz d'échappement selon la revendication 1 ou 2 dans laquelle la plaque de mélange (24; 36) comprend en outre des micro-perforations pour une atténuation supplémentaire du bruit.

4. L'appareil de traitement des gaz d'échappement selon une des revendications précédentes dans lequel la plaque (24 ; 36) est faite en acier.

5. L'appareil de traitement des gaz d'échappement selon une des revendications précédentes dans lequel le dispositif de mélange est configuré pour transporter un flux de gaz à travers ayant une vitesse inférieure à 0,5 Mach et de préférence inférieure à 0,3 Mach.

6. L'appareil de traitement des gaz d'échappement selon une des revendications précédentes dans lequel au moins une plaque de mélange est configurée pour permettre un débit en rotation dudit flux de gaz.

7. L'appareil de traitement des gaz d'échappement selon la revendication 6 dans lequel au moins une plaque de mélange forme des surfaces d'angle qui font qu'au moins une partie des gaz a un débit en rotation dans une direction et au moins une partie des gaz a un débit en rotation dans la direction opposée.

8. L'appareil de traitement des gaz d'échappement selon une des revendications précédentes dans lequel le dispositif de mélange comprend une chambre d'entrée (31), un conduit de mélange (32) dans laquelle l'entrée supplémentaire (12) est située et qui forme ladite chambre de mélange et une chambre de sortie (33), ladite chambre d'entrée et la chambre de sortie étant séparées par une paroi (34) et ledit conduit de mélange s'étendant à travers la paroi de la chambre d'entrée à la chambre de sortie, la configuration étant telle que les gaz doivent passer à travers le conduit de mélange pour passer de la chambre d'entrée à la chambre de sortie, dans lequel la paroi extérieure du conduit de mélange s'étendant dans ladite chambre d'entrée comprend au moins une ouverture (35) à travers laquelle un gaz peut pénétrer dans le conduit de mélange depuis la chambre d'entrée, l'ouverture comprenant au moins une plaque de mélange (36), faisant en sorte qu'au moins une partie d'un gaz passant par au moins une ouverture a un débit en rotation dans la chambre de mélange.

9. L'appareil de traitement des gaz d'échappement selon une des revendications précédentes dans lequel ledit dispositif de mélange est configuré en amont de ladite section de traitement catalytique.

10. Un véhicule possédant un moteur Diesel, le véhicule étant équipé d'un appareil de traitement des gaz d'échappement selon l'une des revendications précédentes pour traiter les gaz d'échappement du moteur Diesel.

11. Une méthode de traitement des gaz d'échappement d'un moteur Diesel, ladite méthode comprenant :
le guidage du flux de gaz à travers une zone de mélange et dans ladite zone de mélange,
l'introduction d'un agent réducteur dans le flux de gaz,
la mise en place d'au moins une plaque de mélange pour influencer le champ d'écoulement interne dudit flux de gaz avant ou après l'introduction dudit agent réducteur, ledit champ d'écoulement interne obtenu favorisant le mélange dudit agent réducteur et dudit flux de gaz,
dans lequel ladite plaque de mélange est faite de métal et au moins une partie de ladite plaque de mélange est d'une épaisseur se situant dans la gamme de 0,4-1 mm, rendant ainsi la pièce flexible et lui permettant d'osciller, le flux de gaz produisant une oscillation de résonance atténuant le bruit dans ladite plaque et conduisant les gaz à travers une section de traitement catalytique.
